# EUROPÄISCHE PATENTSCHRIFT

(11) **EP 0 671 352 B1**
(45) Veröffentlichungstag und Bekanntmachung des Hinweises auf die Patenterteilung: **19.03.1997**
(21) Anmeldenummer: 95101111.3
(22) Anmeldetag: 27.01.1995
(51) Int. Cl.: B65G 69/28

(54) **Überladebrücke für Rampen**
Loading bridge for ramps
Pont de chargement pour rampes

(30) Priorität: 10.03.1994 DE 4408068
(43) Veröffentlichungstag der Anmeldung: 13.09.1995
(73) Patentinhaber: Alten, Kurt, D-30974 Wennigsen (DE)
(72) Erfinder: Alten, Kurt, D-30974 Wennigsen (DE)
(74) Vertreter: Depmeyer, Lothar

(56) Entgegenhaltungen:
- EP-A- 0 096 271
- WO-A-94/19266
- DE-A- 3 717 948
- DE-C- 2 800 127
- US-A- 3 138 812
- US-A- 3 179 968
- US-A- 3 235 895

## Beschreibung

Die Erfindung betrifft eine Überladebrücke für Rampen mit einer rampenseitig um eine waagerechte Achse schwenkbaren, durch längs verlaufende Unterzüge versteifte Brückenplatte, die am vorderen Ende eine unter ihrem Deckblech angeordnete, aus- und einfahrbare Verlängerung zur Abstützung der Brückenplatte auf der zu be- bzw. entladenden Plattform eines Fahrzeuges aufweist, wobei die Verlängerung im hinteren Bereich Längsschlitze aufweist, die von den Unterzügen der Brückenplatte durchsetzt sind.

Bei den bekannten Überladebrücken dieser Art ( DE-C-28 oo 127 ) enden die Unterzüge im Abstand vom vorderen Ende der Brückenplatte; in diesem von den Unterzügen freien Bereich der Brückenplatte befindet sich der nicht geschlitzte, vordere Teil der Verlängerung, wenn sich diese in Ruhestellung befindet. Im ausgefahrenen Zustand der Verlängerung stützt sich diese am hinteren Ende auf Widerlagern an der Brückenplatte ab; an der Stelle, wo die Verlängerung aus der Brückenplatte heraustritt, ergibt sich dabei eine erhebliche Pressung zwischen der Oberseite der Verlängerung und dem vorne liegenden Rand des Deckbleches der Brückenplatte. Dabei können insb. bei starker Belastung und auch bei Stossbelastung bleibende Verformungen des Deckbleches nicht vermieden werden; der vordere Rand des Deckbleches wird nach oben abgebogen.

Durch die Erfindung sollen diese Nachteile behoben werden; die Erfindung strebt also das Ziel an, die Belastbarkeit der Brückenplatte am vorderen Rand zu steigern, ohne nachteilige bleibende Verformungen des Deckbleches in Kauf nehmen zu müssen.

Zur Lösung dieser Aufgabe erstrecken sich erfindungsgemäss die Unterzüge bis in den Bereich der vorderen Kante des Deckbleches der Brückenplatte in der Weise, dass im eingefahrenen Zustand der Verlängerung ihr geschlitzter Teil zumindest zum grössten Teil unterhalb des Deckbleches und der nicht geschlitzte Teil der Verlängerung zumindest zum grössten Teil vor dem Deckblech angeordnet ist. Vorzugsweise werden dabei die Unterzüge unterhalb des vorderen Randes des Deckbleches von einem Querträger unterfangen, dessen Enden an einem beidseitig an der Brückenplatte befestigten Seitenblech verankert sind.

Bei einer so ausgeführten Brückenplatte werden die vorderen, der Schwenkachse der Brückenplatte abgekehrten Ränder des Deckbleches durch die hierunter befindlichen Unterzüge derart unterfangen, dass auch Stossbelastungen eine bleibende Verformung selbst dann nicht herbeiführen können, wenn das Deckblech vergleichsweise dünnwandig dimensioniert ist. Diese Wirkung wird noch durch die vorgenannten Querträger gesteigert.

Um dem Querträger an seinen Enden eine ausreichend sichere Halterung zu bieten und zudem die Sicherheit zu erhöhen, erstrecken sich die Seitenbleche über das freie Ende der Brückenplatte hinaus bis zum freien Ende der Verlängerung ( im eingefahrenen Zustand ).

In der Zeichnung ist ein Ausführungsbeispiel der Erfindung dargestellt. Es zeigen :
Fig. 1 einen Längsschnitt durch eine in Ruhestellung befindliche Überladebrücke in schematischer Darstellung,
Fig. 2 eine Teildraufsicht auf die Überladebrücke gemäss Fig. 1 und
Fig. 3 einen Schnitt nach der Linie III - III von Fig. 1.

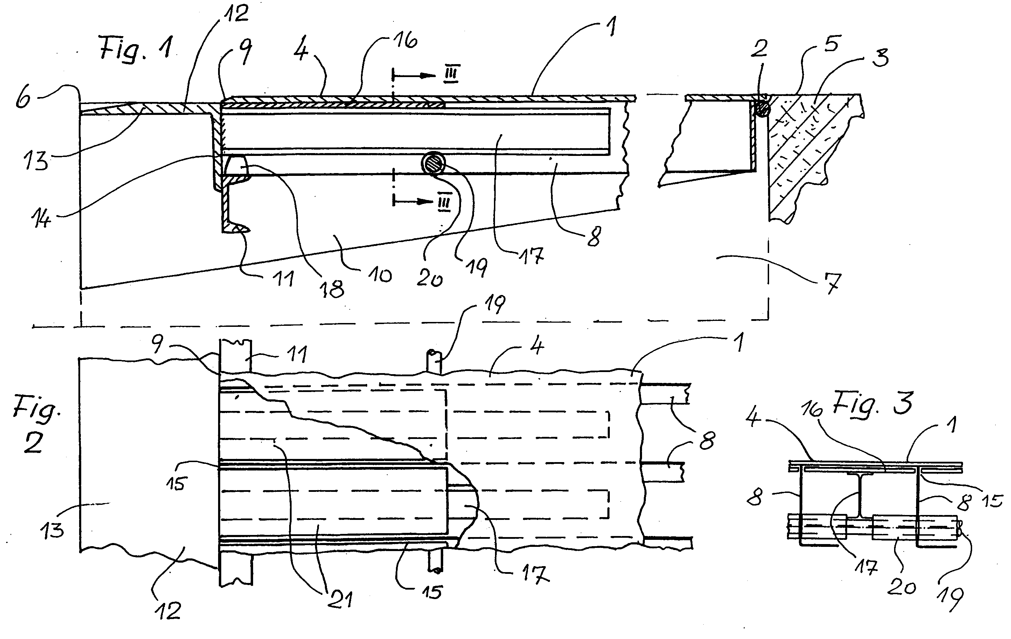

Die Brückenplatte 1 ist an ihrem hinteren Ende um eine waagerechte Achse 2 an der Rampe 3 verschwenkbar gelagert. Bei Nichtbetrieb schliesst das die Brückenplatte 1 nach oben hin abschliessende, meist aufgerauhte Deckblech 4 mit der Oberfläche 5 der Rampe 3 ab, deren vordere Kante mit 6 bezeichnet ist. Unterhalb der Brückenplatte 1 befindet sich in der Rampe 3 eine der Grösse der Brückenplatte 1 entsprechende Ausnehmung 7, in die die Brückenplatte 1 eintauchen kann, wenn die zu be- bzw. entladende Plattform eines Fahrzeuges tiefer als die Oberfläche 5 liegt. Liegt die Plattform höher als die Oberfläche 5, so wird die Brückenplatte 1 nach oben geschwenkt. Dazu sind bekannte Hubzylinder vorgesehen; für die Ruhestellung gemäss Zeichnung ist die Brückenplatte 1 durch Stützen unterfangen.

Die Brückenplatte 1 weist mehrere, längs zur Brücke verlaufende Unterzüge 8 auf, die L-förmig gestaltet und mit dem Deckblech 4 fest verbunden sind. Die Unterzüge 8 sind bis an den vorderen Rand 9 des Deckbleches 4 geführt. Zu beiden Seiten der Brückenplatte 1 befindet sich je ein etwa dreieckförmiges Seitenblech 10, das seitlich an der Brückenplatte 1 befestigt ist und sich senkrecht nach unten verläuft. Es erstreckt sich vom hinteren Ende der Brückenplatte 1 über das vordere Ende der Brückenplatte 1 hinaus bis in den Bereich der Rampenkante 6.

Die beiden Seitenbleche 10 dienen zur festen Verankerung eines Querträgers 11, der der Unterstützung der Unterzüge 8 unterhalb der Kante 9 dient.

Am freien Ende der Brückenplatte 1 befindet sich eine Verlängerung 12, die durch nicht näher dargestellte Arbeitszylinder in Brückenlängsrichtung verschiebbar ist. So kann die Verlängerung 12 ausgefahren und das sich ungeteilt quer zur Brücke erstreckende Auflageteil 13 auf die Plattform eines Fahrzeuges aufgelegt werden. Nach Abschluss des Verladebetriebes wird die Verlängerung 12 wieder eingezogen bzw. in die Stellung gemäss Zeichnung gebracht. Das Auflageteil 13 ist der etwa waagerechte Schenkel eine Winkelstückes, dessen senkrechter Schenkel mit 14 bezeichnet ist. Er dient als Schild und Anschlag beim Ladebetrieb. Nach hinten geht das Auflageteil 13 der Verlängerung 12 in eine mit Längsschlitzen 15 versehene Platte 16 über, deren Breite dem gegenseitigen Abstand der Unterzüge 8 entspricht und die durch Längsträger 17 unterfangen sind, die die Platte 16 nach hinten überragen.

Die Längsträger 17 ruhen vorne auf einem Widerlager 18 am Querträger 11 und etwa auf halber Länge auf einer Querachse 19, die die Unterzüge 8 durchsetzt und an ihren beiden Enden mit den Seitenblechen 1o fest verbunden sind. Es sind auf der Querachse 19 Distanzhülsen 2o aufgeschoben, die der Führung und Zentrierung der Längsträger 17 dienen. Im übrigen durchsetzen die Unterzüge 8 die Platte 16 aufgrund der Schlitze 15.

Somit überragt das Auflageteil 13 die Brückenplatte 1 im Ruhezustand der Brücke. Ist die Verlängerung 12 hingegen ausgefahren, so tritt die Platte 16 mit ihren Schlitzen 15 unter dem Deckblech 4 hervor, um so die gewünschte Verlängerung der Brücke zum Ladebetrieb herbeiführen zu können. Wird die Brücke nunmehr durch Flurfördergeräte od. dgl. belastet, so stützt sich die Verlängerung 12 an der Unterseite über die Längsträger 17 auf der Querachse 19 ab. Gleichzeitig ergibt sich auch eine Pressung im Bereich des Randes 9 am Deckblech 4. Da dieser aber durch die Unterzüge 8 und den Querträger 11 gerade im Kantenbereich unterfangen und versteift ist, können aufbiegende Kräfte zwar auftreten, jedoch keinen Schaden herbeiführen, indem sie das Deckblech bei 9 bleibend aufbiegen.

Die Erfindung schliesst nicht aus, dass das Auflageteil 13 sich nicht über die gesamte Breite der Brückenplatte 1 erstreckt, vielmehr können z.B zur Bildung von sog. vorwiegend an den Brückenrändern befindlichen Einstosszungen Unterteilungen vorgesehen werden, wobei dann am Brückenrand zumeist eine oder zwei Einstosszungen vorgesehen werden, die unabhängig vom mittig gelegenen Auflageteil 13 in Richtung auf die Rampe 3 bewegbar sind. Dennoch dient das Auflageteil 13 zur Befestigung der Platte 16 bzw. der durch die Schlitze 15 bedingten Abschnitte 21, deren Breite dem gegenseitigen Abstand der Unterzüge 8 entspricht.

Wenngleich auch bei ausgefahrener Verlängerung 12 die Schlitze 15 zum grössten Teil in der aktiven Brückenoberfläche liegen, sind sie nicht schädlich, weil sie nur eine vergleichsweise kleine Breite haben.

Verständlicherweise ist die Kante am Rand 9 abgeschrägt, um ein stofssfreies Überfahren sicherzustellen.

Der vordere Rand 9 des Deckbleches 4 und die vorne liegenden Stirnflächen der Unterzüge sollen zumindest in etwa in einer Ebene liegen, die senkrecht, aber auch schräg verlaufen kann.

## Patentansprüche

1. Überladebrücke für Rampen mit einer rampenseitig um eine waagerechte Achse schwenkbaren, durch längs verlaufende Unterzüge (8) unter dem Deckblech (4) versteiften Brückenplatte (1), die am vorderen Ende eine unter ihrem Deckblech (4) angeordnete, aus- und einfahrbare Verlängerung (12) zur Abstützung auf der zu be- bzw. entladenden Plattform eines Fahrzeuges aufweist, wobei die Verlängerung (12) im hinteren, der Rampe zugekehrten Bereich Längsschlitze (15) aufweist, die von den Unterzügen (8) der Brückenplatte (1) durchsetzt sind, dadurch gekennzeichnet, dass sich die Unterzüge (8) bis in den Bereich des vorderen Randes (9) des Deckbleches (4) der Brückenplatte (1) erstrecken in der Weise, dass im eingefahrenen Zustand der Verlängerung (12) ihr geschlitzter Teil (16) zumindest zum grössten Teil unterhalb des Deckbleches und der nicht geschlitzte Teil (13) der Verlängerung (12) zumindest zum grössten Teil vor dem Deckblech (4) angeordnet ist.

2. Überladebrücke nach Anspruch 1, dadurch gekennzeichnet, dass die Unterzüge (8) zumindest im wesentlichen senkrecht unterhalb des vorderen Randes (9) von einem Querträger (11) unterstützt sind.

3. Überladebrücke nach Anspruch 1, dadurch gekennzeichnet, dass der vordere Rand (9) und die vorne liegenden Stirnflächen der Unterzüge (8) zumindest im wesentlichen in einer vorzugsweise senkrechten Ebene liegen.

4. Überladebrücke nach Anspruch 1 mit zu beiden Seiten der Brückenplatte angeordneten, senkrechten Seitenblechen (10) dadurch gekennzeichnet, dass die Seitenbleche (10) ( von der Rampe 3 aus gesehen ) den vorderen Rand (9) des Deckbleches (4) überragen und mit ihren freien Enden im wesentlichen mit dem vorderen Ende der in der Ruhestellung befindlichen Verlängerung (12) abschliessen.

5. Überladebrücke nach Anspruch 1, dadurch gekennzeichnet, dass die durch die Schlitze (15) begrenzten Abschnitte (21) des geschlitzten Teils (16) der Verlängerung (12) mittig durch Längsträger (17) unterfangen sind, die vorne mit dem nicht geschlitzten Teil der Verlängerung (12) verbunden sind und hinten die Abschnitte überragen.

6. Überladebrücke nach Anspruch 1, dadurch gekennzeichnet, dass die Verlängerung (12) unterfangende, längs zur Brücke verlaufende, zwischen den Unterzügen (8) angeordnete Längsträger (17) vorgesehen sind, die sich unten auf einer Querachse (19) abstützen, welche die Unterzüge (8) durchsetzt und an ihren Enden mit Seitenblechen (10) der Brückenplatte (1) verbunden ist.

7. Überladebrücke nach Anspruch 5, dadurch gekennzeichnet, dass die Querachse (19) von Distanzhülsen (20) umschlossen ist, deren Länge dem Abstand der Längsträger (17) von den Unterzügen (8) entspricht.

8. Überladebrücke nach Anspruch 5, dadurch gekennzeichent, dass die Längsträger (17) im Bereich des vorderen Randes (9) des Deckbleches (4) unterstützt sind ( Widerlager 18 ).

## Claims

1. Transfer bridge for platforms, having a bridge plate (1) which is pivotable at its platform end about a horizontal axis, said bridge plate being reinforced by longitudinally extending supports (8) beneath the cover sheet (4) and having, at its front end, a retractable and extendable extension member (12), which is disposed beneath the cover sheet (4), for support on the deck of a vehicle to be loaded or unloaded, the extension member (12) being provided, in the rear region facing the platform (12), with elongate slots (15) which are traversed by the supports (8) of the bridge plate (1), characterised in that the supports (8) extend into the region of the front edge (9) of the cover sheet (4) of the bridge plate (1) in such a manner that, when the extension member (12) is in its retracted position, its slotted part (16) is disposed at least mostly beneath the cover sheet, and the non-slotted part (13) of the extension member (12) is disposed at least mostly in front of the cover sheet (4).

2. Transfer bridge according to claim 1, characterised in that the supports (8) are supported at least substantially vertically beneath the front edge (9) by a transverse carrier (11).

3. Transfer bridge according to claim 1, characterised in that the front edge (9) and the front end faces of the supports (8) lie at least substantially in a plane which is preferably vertical.

4. Transfer bridge according to claim 1, having vertical lateral sheets (10) disposed on both sides of the bridge plate, characterised in that the lateral sheets (10) (when viewed from the platform 3) protrude beyond the front edge (9) of the cover sheet (4) and terminate, with their free ends, substantially the front end of the extension member (12), which is in its inoperative position.

5. Transfer bridge according to claim 1, characterised in that the sections (21) of the slotted part (16) of the extension member (12) are defined by the slots (15) and are supported centrally by longitudinal carriers (17), which have their front end connected to the non-slotted part of the extension member (12) and have their rear end protruding beyond the sections.

6. Transfer bridge according to claim 1, characterised in that longitudinal carriers (17) are provided, which support the extension member (12), extend longitudinally relative to the bridge and are disposed between the supports (8), the lower end of said longitudinal carriers being supported on a transverse axle (19), which traverses the supports (8) and is connected at its ends to lateral sheets (10) of the bridge plate (1).

7. Transfer bridge according to claim 5, characterised in that the transverse axle (19) is surrounded by spacer sleeves (20), the length of which sleeves corresponds to the spacing between the longitudinal carriers (17) and the supports (8).

8. Transfer bridge according to claim 5, characterised in that the longitudinal carriers (17) are supported in the region of the front edge (9) of the cover sheet (4) (support 18).

## Revendications

1. Niveleur de quai comportant un tablier (1) pouvant basculer du côté quai autour d'un axe horizontal, et renforcé par des sous-poutrelles (8) s'étendant longitudinalement sous la tôle de couverture (4), ce tablier présentant à l'extrémité avant un prolongement (12) pouvant être sorti et rentré, situé sous sa tôle de couverture (4) et destiné à s'appuyer sur la plateforme d'un véhicule à charger ou à décharger, le prolongement (12) comportant, dans sa zone arrière tournée vers le quai, des fentes longitudinales (15) qui sont traversées par les sous-poutrelles (8) du tablier (1), caractérisé par le fait que les sous-poutrelles (8) s'étendent jusque dans la zone du bord avant (9) de la tôle de couverture (4) du tablier (1), de telle manière que, lorsque le prolongement (12) est rentré, la partie à fentes (16) soit disposée, au moins pour la plus grande partie, au-dessous de la tôle de couverture et que la partie non fendue (13) de la rallonge (12) soit située, au moins pour la plus grande partie, en avant de la tôle de couverture (4).

2. Niveleur de quai selon la revendication 1, caractérisé par le fait que les sous-poutrelles (8) sont soutenues, au moins sensiblement perpendiculairement au-dessous du bord avant (9) par une poutre transversale (11).

3. Niveleur de quai selon la revendication 1, caractérisé par le fait que le bord avant (9) et les faces frontales avant des sous-poutrelles (8) sont situés au moins sensiblement dans un plan, de préférence vertical.

4. Niveleur de quai selon la revendication 1, comportant des tôles latérales (10) verticales disposées des deux côtés du tablier, caractérisé par le fait que les tôles latérales (10) (si l'on regarde depuis le quai 3) dépassent du bord avant (9) de la tôle de couverture (4) et bordent sensiblement, par leurs extrémités libres, l'extrémité avant du prolongement (12) dans la position de repos.

5. Niveleur de quai selon la revendication 1, caractérisé par le fait que les tronçons (21) délimités par les fentes (15), de la partie à fentes (16) du prolongement (12), sont soutenus au centre par des longerons (17), qui sont reliés à l'avant à la partie non fendue du prolongement (12) et qui, à l'arrière, font saillie derrière les tronçons.

6. Niveleur de quai selon la revendication 1, caractérisé par le fait qu'il est prévu des longerons (17), disposés entre les sous-poutrelles (8), s'étendant dans le sens longitudinal par rapport au pont et soutenant le prolongement (12), ces longerons prenant appui au-dessous sur un axe transversal (19), qui traverse les sous-poutrelles (8) et qui est relié à ses extrémités aux tôles latérales (10) du tablier (1).

7. Niveleur de quai selon la revendication 5, caractérisé par le fait que l'axe transversal (19) est entouré par des douilles d'écartement (20), dont la longueur correspond à la distance entre les longerons (17) et les sous-poutrelles (8).

8. Niveleur de quai selon la revendication 5, caractérisé par le fait que les longerons (17) sont soutenus (support 18) dans la zone du bord avant (9) de la tôle de couverture (4).
